(19) Europäisches Patentamt
European Patent Office
Office européen des brevets

(11) **EP 4 383 146 A1**

(12) **EUROPEAN PATENT APPLICATION**

(43) Date of publication:
**12.06.2024 Bulletin 2024/24**

(21) Application number: **22306809.9**

(22) Date of filing: **07.12.2022**

(51) International Patent Classification (IPC):
***G06N 10/70*** (2022.01)     ***G06N 10/40*** (2022.01)

(52) Cooperative Patent Classification (CPC):
**G06N 10/70; G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Institut National de Recherche en Informatique et en Automatique**
**78153 Le Chesnay-Rocquencourt Cedex (FR)**

(72) Inventors:
• **GAUTIER, Ronan**
**75014 PARIS (FR)**
• **SARLETTE, Alain**
**59000 LILLE (FR)**

(74) Representative: **Vidon Brevets & Stratégie**
**16B, rue de Jouanet**
**BP 90333**
**35703 Rennes Cedex 7 (FR)**

(54) **DEVICE AND METHOD FOR PHASE FLIP REDUCTION IN CAT-QUBITS**

(57)     Electronic apparatus for storing quantum information, comprising:
- a cat qubit electromagnetic resonator (10) having a resonance frequency $\omega_a$;
- a buffer electromagnetic resonator (20) having a resonance frequency $\omega_b$;
- a non-linear coupling element (30); coupling means for coupling a electromagnetic wave at frequency $\omega_b$ and for coupling an electromagnetic wave at frequency $2\omega_a - \omega_b$; and
- a dissipation device (40) coupled to the cat qubit resonator (10) and to the buffer resonator (20) through the non-linear coupling element (30);
- wherein a four-wave mixing involving two photons at frequency $\omega_a$, one photon at frequency $\omega_b$ and a photon of the electromagnetic wave at frequency $2\omega_a - \omega_b$ is performed.

    The coupling means (60) are further configured for coupling a third electromagnetic wave at a frequency $(2n+1)\omega_a + \omega_b - \omega_c$, $\omega_c$ being a resonance frequency of a lossy mode and n being an integer, to the non-linear element (30).

Generic schematic

Possible implementation in lumped-elements

Fig. 2

**Description**

Technical field

The invention lies in the field of quantum information processing and quantum computing. It relates to a device and a method for storing and/or processing quantum information in the form of confined quantum cat qubits, while reducing first-order phase flip errors. It applies to all such confined cat-qubits and in particular to squeezed cat-qubits. The device and the method are based on a pattern of feedback from the cat-qubit in which the cat-qubit is autonomous to perform such feedback. Quantum computing is an emerging field at the intersection of physics, mathematics and computer science. It is based on building circuits addressing qubits, or quantum bits. The qubits are basic units of quantum information or basic two-state quantum-mechanical systems. The circuits can be electronic circuits, or circuits based on photons, atoms or trapped ions. Thanks to its properties, a qubit can be in a superposition of two states simultaneously. In a quantum computer, a quantum logic gate or quantum gate is an operation on a small number of qubits and is thus a building block for larger quantum calculations.

A quantum computer uses quantum properties such as superposition, interference, and entanglement and solves certain complex computational problems more easily and faster than a non quantum computer.

Technical background - state of the art

Physical means used to build the circuits - cat-qubit and their features

There are several approaches to building the qubits and the gates of a quantum computer, one of which is based on superconducting circuits cooled down to a few milliKelvins (mK).

Within the field of superconducting circuits, a known method is to encode data in anharmonic oscillator circuits composed of a Josephson junction in parallel to a capacitance. These circuits are called transmon qubits, their naming transmon standing for "transmission line shunted plasma oscillation". Anharmonicity allows having the energy levels separated by non-identical energy differences, and thus operating only the transition between two identified levels |0> and |1>, in a controlled manner, with a signal at a given frequency.

But a later and highly advantageous method uses *harmonic* LC-oscillators, i.e. an electric circuit consisting of an inductor L and a capacitor C connected together, and acting as an electrical resonator. It encodes information as Schrödinger cat states, referring to a system which is common in non-quantum (i.e. classical) models being in the quantum superposition state of its classical-like states. The hence called *cat-qubits* typically use e.g. quantum superpositions of coherent states with a same weight and opposite phases. More generally, such information can be encoded in so-called bosonic modes, creating a bosonic code or continuous-variable code - typically in photons, but also phonons or other types of oscillators on other physical platforms. This approach, first developed in a collaborative work between the applicant and Yale University, is pursued by several academic and private actors. Generally, in bosonic codes, the high dimension of the harmonic oscillator implies a redundancy which is used in order to reduce the impact of physical errors on the logical information that is encoded, without requiring active monitoring, and this is one reason for bosonic codes being very attractive.

Cat-qubits are interesting because they show a reduced impact of physical errors as qubits with a noise bias, meaning that one of the two fundamental errors occurring in qubits, *i.e.* bit flips and phase flips, is exponentially suppressed in the cat-qubit size - the size of the cat-qubit being the average number of photons in the oscillator - while the other fundamental error is only linearly increased, thus providing an attractive scaling. In the context of quantum error correction codes, a qubit with exponential error bias can drastically reduce the required overhead, i.e. the number of physical qubits per logical qubit, to reach a satisfactory or given level of information protection. Nevertheless, it is important to maintain rates for the unprotected type of error, i.e. the one between bit flips and phase flips that is not exponentially suppressed in a single cat qubit, as low as possible. Indeed, quantum error correction codes can only be efficient if these errors, whatever their type, lie below a certain threshold rate, compared to the error correction cycle. Moreover, even below threshold, higher error rates require codes of larger overhead. Even if the overhead is lower for cat-qubits than for qubits without noise bias, it nonetheless implies significant complications in terms of practical construction, and for operating logical operations on encoded information.

The present invention describes the situation in which bits are the exponentially protected type of quantum information and phases are the one that is not exponentially suppressed. But it also applies to the opposite situation.

Confinement to the codespace

Confinement to the two-dimensional codespace, which is necessary for operating the qubits, that are intrisiquely multi-level systems, in a quantum processor, has been experimentally shown for cat-qubits.

Two methods to confine the state of a quantum harmonic oscillator to a two-dimensional manifold corresponding to the logical states of a cat-qubit are known. These two confinement methods are based respectively on engineered two-photon dissipation and on a self-Kerr nonlinearity of the junction in the harmonic oscillator Hamiltonian.

The first method - dissipation-based - is disclosed in Mirrahimi, 2014 and Lescanne, 2020 and is based on a confinement scheme arising from engineered two-photon dissipation and confines the dynamics to the only two steady states of the ideal system, being the cat-qubit computational states. The bit flips are suppressed exponentially. The confinement is achieved through a superconducting circuit element called an Assymetrically Threaded Superconductive Quantum Interference Device, or Assymetrically Threaded SQUID, or ATS, disclosed in US11302856B2. The cat-qubit, encoded in a linear resonator, is coupled to a buffer mode using an ATS, where the buffer-mode is highly dissipative and decays energy much faster than the lifetime of the cat-qubit. The buffer mode does not need to be harmonic, as only its two lowest levels are essential for the device operation. In the paper by Chamberland, 2020, the authors further proposed to couple a single buffer mode to multiple cat-qubits, instead of using a buffer mode for each cat-qubit. More precisely, in this dissipative approach, a two-photon-to-one-photon exchange Hamiltonian is engineered via the ATS between the cat-qubit mode and a short lifetime buffer mode respectively, in the rotating frame of both modes:

$$H_{2ph} = g_2\left(a^2 b^\dagger + a^{2\dagger} b\right)$$

Here, $a$ represents the photon annihilation operator of the cat-qubit mode and $b$ represents the photon annihilation operator of the buffer mode. Furthermore, $a^\dagger$ and $b^\dagger$ are the associated photon creation operators. Therefore, two photons of the $a$ mode are exchanged with a single photon of the $b$ mode. Furthermore, $g_2$ represents the rate of this exchange and can be tuned through the amplitude of a microwave pump that is applied to the ATS device. The buffer mode $b$ must also be driven at its resonance. In the rotating frame of the buffer mode, this can be modelled by the following Hamiltonian

$$H_{\text{drive}} = \epsilon b^\dagger + \epsilon^* b$$

The drive amplitude can be related to an effective amplitude in the cat-qubit mode via the equation $\varepsilon = g_2\alpha^2$. Therefore, the total interaction Hamiltonian can be written as

$$H_{\text{tot}} = g_2\left(\left(a^2 - \alpha^2\right)b^\dagger + \left(a^2 - \alpha^2\right)^\dagger b\right)$$

The strong dissipation of the mode b then translates to an effective dissipation of the form $\kappa_2 \mathcal{D}[a^2 - \alpha^2]$. This is called the two-photon dissipation, and is viewed as a way of pulling the state of the system to confine the harmonic oscillator state to the two-dimensional space spanned by coherent states $|\pm \alpha\rangle$, defining a confined cat-qubit. A method to perform single qubit Z rotations, two-qubit CNOT gates also known as CX gates, and three-qubit CCNOT gates, also called CCX or Toffoli, on such dissipative cat-qubits is described in Guillaud, 2019.

A feedforward Hamiltonian which simultaneously "pushes" the state of the system is used in synergy with the two-photon dissipation that is said to "pull" the state of the system. In practice, the dissipation terms remain implemented through the ATS and using a coupling to the buffer mode; the feedforward term for the Z gates is just a standard drive on the cat-qubit mode, while the feedforward terms for the CNOT and CCNOT gates can be implemented through a driven nonlinear coupling between the involved cat modes.

A second method to confine the cat-qubit state is a purely Hamiltonian confinement based on two-photon driving and Kerr non-linearity, as disclosed in Puri, 2017 and in Grimm, 2020. This approach is called the Kerr cat-qubits. In the rotating frame of the cat-qubit mode, it can be modelled by the Hamiltonian

$$H = -K\left(a^2 - \alpha^2\right)^\dagger\left(a^2 - \alpha^2\right)$$

Here $K$ represents the strength of the Kerr effect and $K\alpha^2$ is the amplitude of the two-photon drive. The manifold associated to the cat-qubit states corresponds to a degenerate eigenspace of the above engineered Hamiltonian, separated from the rest of the spectrum with a gap proportional to the strength of the Kerr non-linearity $K$ On both these confinement schemes, through two-photon dissipation or through the Kerr cat-qubit approach, improved mechanisms have been disclosed to reduce gate-induced phase errors, in Gautier, 2022 and Xu, 2022-1.

The present invention builds on the dissipative confinement setup.

Phase flips, and in particular gate-induced phase errors

Further, phase flips, also known as phase errors, are specifically targeted by the present invention. Their two main sources are thus briefly discussed herebelow.

The first source of phase errors is the natural decoherence mechanism by spontaneous single-photon loss. This is the dominant perturbation acting on the idle harmonic oscillator. Its effect on the bit part of information is well countered by the cat confinement. On the phase part, its effect is that every photon loss inverts the logical value. Thus, after two consecutive losses, the logical value is back to the original value. But since, with just a single cat-qubit, there is no way to measure how many times a photon loss has occurred without destroying the bit part of the information, as time passes, there is a growing uncertainty on how many photon losses have occured, and thus on what was the encoded phase value.

The second source of phase errors appears when applying certain logical operations, through gates, on a cat-qubit. Indeed, the standard Hamiltonians, like applying a displacement Hamiltonian $H_{gate} = u(t)(a + a^+)$, only induce imperfect phase control: the phase shifts by a well-controlled amount but it also necessarily gets blurred, as the physical operation cannot be exactly aligned with the cat-qubit codespace. This contributes additional phase flip errors, because this is the unprotected part of encoded quantum information, while the transient displacement out of the cat-qubit subspace is countered by the two-photon dissipation.

Techniques exist to mitigate this effect, but it is challenging to completely suppress it. In particular, the effect is worse for faster gates. This includes the CNOT gates actually used for error correction of the phase. Despite the improved mechanisms recently proposed to reduce gate-induced phase errors in Gautier, 2022 and Xu, 2022-1, any further phase-protection mechanisms are interesting to reach a satisfactory combined level of speed and accuracy for quantum computing.

Squeezed cats and other cats - short comparison with standard cat-qubits

A variant of the cat-qubits named the squeezed cats is known, and implemented by superposition of squeezed coherent states. It has a confinement mechanism that is not much more complicated than for standard cat-qubits. The invention applies to such particular cat-qubits also.

In the standard cat-qubit, the dominant perturbation mechanism, i.e. spontaneous photon-loss, induces phase flips while remaining inside the codespace, hence being not detectable. Unlike on standard cat-qubits, the spontaneous loss of a photon on squeezed cats can in principle be detected because it displaces the state out of the codespace. Moreover, this is still the dominant error source inducing phase flips on the quantum information. Thus, detecting and correcting this part of the error process can be contemplated and would be very useful. The reduction of phase errors in squeezed cats via this observation has been discussed in Carde, 2021, Schlegel, 2022, and Xu, 2022-2.

In other non-squeezed cat-type encodings of quantum information, like cats involving several harmonic oscillators as in Albert, 2019 or involving more than two coherent state components as in Ofek, 2016, the spontaneous loss of a photon can in principle be detected by a well-adapted measurement, because it displaces the quantum state out of the codespace, as in squeezed cats. However, this "displacement" takes a more peculiar form than for the perturbations discussed hereabove on two-component (squeezed or non-squeezed) cats; these are not addressed by the present invention, and equivalent proposals on such cat-types appear to be currently unknown.

The displacement of two-component (squeezed or non-squeezed) cats out of their codespace induces a reaction of the buffer mode, which is displaced out of the vacuum. The strong dissipation of the buffer mode, which is engineered on purpose, quickly induces a photon loss by the buffer mode as the cat-qubit mode simulatenously settles back into the code-space. In principle, it is possible to detect the photon lost by the buffer mode, since this is an engineered process, and thereby detect when the cat qubit mode has been displaced out of the codespace, and apply a corrective action on the cat-qubit phase in consequence. However, based on currently available technology, the method that would be to repeatedly measure the photons lost by the buffer mode and correct, on the basis of Carde, 2021, or Schlegel, 2022, appears too little promising in practice.

Autonomous feedback vs feedback based on measurement

Indeed, implementing phase-corrective action on the basis of an actual quantum measurement followed by a correction operation is likely to involve physical elements highly complicated and not efficient. In particular, measurement devices usually have a "detection inefficiency" of several 10%s, and at least in the context of dissipative confinement, this directly translates in the same inefficiency for feedback correction of phase errors. Further there are isolation complications with signals going from quantum to classical computer and back. Thus, a feedback based on measurement is not an attractive solution.

The concept of "autonomous feedback" is a natural way to circumvent the questionability of measurement-loop fidelity at the quantum level, especially in the context where dissipative stabilization is already present. The principle, further worked out below, is to engineer a physical mechanism which lumps together the deviation to be detected and the action to be taken. The challenge is how to engineer such mechanism with simple physical building blocks. Early coherent feedback principles have been proposed by Mabuchi, 2008 and James and Gough, 2010. In Xu, 2022-2, a particular "autonomous feedback" controller is proposed for the present task, with the prime observation that it applies to squeezed-cat feedback and the side benefit of reducing the non-adiabatic gate-induced errors.

Problem solved by the invention

Standard cat-qubit methods decrease bit flip error rates, but have no satisfactory solution to counter phase flip errors.

The present invention proposes a physical mechanism to automatically perform the correction of the phase errors *in situ,* at least to first order.

The present invention offers a modification in the dissipative cat-qubit confinement mechanism, such that the action of getting back to the cat-qubit space at the same time automatically corrects some of the phase errors.

More precisely, on all cat-qubits, including standard cat-qubits, the invention offers correction to first order of the phase error induced by Hamiltonians used to perform gates.

And specifically on squeezed cat-qubits, the invention furthermore corrects to first order the phase errors induced by spontaneous single-photon loss or gain which is often the dominant decoherence process. Thus, the invention has a special advantage for squeezed cat-qubits.

Further, whatever the nature of the cat-qubits used, standard cat-qubits, squeezed cat-qubits or possibily cat-qubits that are neither standard nor squeezed, the invention can be combined with other phase-protection methods.

Compared to Xu, 2002-2, the present invention proposes a different concrete implementation of autonomous feedback for this task. These two impementations feature different advantages and drawbacks with respect to issues faced in concrete embodiments, both in terms of robustness to secondary effects, and in terms of practicality with respect to manufacturing process.

For instance, the autonomous feedback targeted by Xu, 2022-2 requires a large number of microwave pumps to be engineered. In the proposition of a practical implementation of this paper, detailed by their equation n°16, five microwave pumps - one or two between each pair of resonators - and two microwave drives - on distinct resonators - are required. This large number of pumps and drives brings practical difficulties, with frequency collisions, or due to the large amount of qubit connectivity required since eventually hundreds of cat-qubits are built on a chip, each needing these numbers of pumps and drives. The present invention offers a more straightforward design, with fewer pumps and drive with a performance that is largely similar.

In this context, the invention consists of an electronic apparatus for storing quantum information, comprising:

- a cat qubit electromagnetic resonator having a first resonance frequency $\omega_a$;
- a buffer electromagnetic resonator having a second resonance frequency $\omega_b$ different from the first resonance frequency;
- a non-linear coupling element coupling the cat qubit resonator to the buffer resonator;
- coupling means - including for instance a coaxial cable having a suitable bandwidth - configured for coupling a first electromagnetic wave at frequency $\omega_b$ to the non-linear coupling element and coupling means - for instance the same coaxial cable as mentioned for the first wave, or a different coaxial cable - configured for coupling a second electromagnetic wave at frequency $2\omega_a-\omega_b$ to the non-linear coupling element; and
- a dissipation device coupled to the cat qubit resonator and to the buffer resonator through the non-linear coupling element;

wherein the non-linear coupling element is configured for performing a four-wave mixing involving two photons at frequency $\omega_a$, one photon at frequency $\omega_b$ and a photon of the second electromagnetic wave at frequency $2\omega_a-\omega_b$ to exchange said two photons at frequency $\omega_a$ in the cat qubit resonator with said photon at frequency $\omega_b$.

The apparatus is original because of at least the following features:

- it has coupling means - again for example the same coaxial cable as mentioned above for the first wave, or a different coaxial cable - further configured for coupling one or more third electromagnetic waves at a frequency $(2n+1)\omega_a +$

$\omega_b$-$\omega_c$, $\omega_c$ being a resonance frequency of a lossy mode of the dissipation device different from $\omega_a$ and $\omega_b$ and n being a non-negative integer (for instance, n=0), to the non-linear coupling element; this lossy mode now embodying the dissipative character of the device, while unlike in the standard cat qubit the buffer mode is here non-dissipative.

- the non-linear coupling element is further configured for performing one or several instances of an 2n+4-wave mixing involving 2n+1 photons at frequency $\omega_a$ in the cat qubit resonator, one photon at frequency $\omega_b$ in the buffer resonator, one photon at frequency $\omega_c$ of the lossy mode and one photon of the third electromagnetic wave, said 2n+4-wave mixing causing a positive odd number of photons of the cat qubit resonator to dissipate correlately through the dissipation device with one photon of the buffer resonator. In a more general manner, this 2n+4-wave mixing can be present in a larger set of wave mixings, performing exchanges involving odd numbers of photons at frequency $\omega_a$ in the cat qubit resonator.

The invention is also embodied in a method for storing quantum information, comprising:

- coupling a cat qubit electromagnetic resonator having a first resonance frequency $\omega_a$ and a buffer electromagnetic resonator having a second resonance frequency $\omega_b$ different from the first resonance frequency with a non-linear coupling element;
- coupling a first electromagnetic wave at frequency $\omega_b$ and a second electromagnetic wave at frequency $2\omega_a$-$\omega_b$ to the non-linear coupling element; and
- coupling a dissipation device to the cat qubit resonator and to the buffer resonator through the non-linear coupling element;

wherein the method for storing information further comprises performing a four-wave mixing with the non-linear coupling element involving two photons at frequency $\omega_a$, one photon at frequency $\omega_b$ and a photon of the second electromagnetic wave at frequency $2\omega_a$-$\omega_b$ to exchange said two photons at frequency $\omega_a$ in the cat qubit resonator with said photon at frequency $\omega_b$.

The method is original because of the following features:

- the method for storing information further comprises coupling a third electromagnetic wave at a frequency (2n+1) $\omega_a$ + $\omega_b$-$\omega_c$, $\omega_c$ being a resonance frequency of a lossy mode of the dissipation device different from $\omega_a$ and $\omega_b$ and n being a non-negative integer, to the non-linear coupling element;
- and the method for storing information further comprises performing a (2n+4)-wave mixing with the non-linear coupling element involving (2n+1) photons at frequency $\omega_a$ in the cat resonator, one photon at frequency $\omega_b$ in the buffer resonator, one photon at frequency $\omega_c$ of the lossy mode and one photon at frequency (2n+1)$\omega_a$ + $\omega_b$-$\omega_c$ of the third electromagnetic wave, said (2n+4)-wave mixing causing a positive odd number of photons of the cat qubit resonator to dissipate correlately through the dissipation device with one photon of the buffer resonator.

The joint dissipation flips the phase value of the cat-qubit while it jumps back to its subspace of steady states; so the invention flips the phase back to its original value when correcting the displacement out of the subspace of steady-states.

In this way, the new design enables to autonomously correct the dominant order of phase errors during gate operation on cat-qubits, hence enabling to combine an exponential protection of bit-flip errors thanks to the properties of cat-qubits, with an original improved protection against phase-flip errors. This allows using faster gates without the non-corrected error rate being too high.

To be more precise, it has to be acknowledged that the invention offers first-order corrections, annihilating not all the effect of the typically dominant error channels, but its dominant part such that one or two orders of magnitude can be gained on phase precision.

In standard cat-qubits, implementing the invention only during certain gate operations, and otherwise keeping the standard dissipation can be contemplated. The invention is compatible for combination with other schemes improving the phase protection during gate operation, like counter-diabatic drives such as disclosed in Xu, 2022-1.

For squeezed cat-qubits, the same design also corrects, to first order, the phase flip associated to spontaneous single-photon loss that is the dominant error source intrinsic to the cat-qubit.

Additional engineering complexity is low, since it requires a limited number of microwave pumps and drives, i.e. four pumps and one drive in the minimal setup for squeezed cats; two pumps and one drive for non-squeezed cats.

Even if this additional engineering introduces some other perturbations into phase errors, those other perturbations are of a much lower order than the errors arising from gate-induced noise and spontaneous decoherence, such that overall, the phase is clearly better protected.

Other features are optional and advantageous, and are indicated herebelow.

- the further dissipation device may comprise a third electromagnetic resonator, resonant at frequency $\omega_c$, and coupled to a transmission line;
- the further dissipation device may comprise a non-linear resonator;
- the cat qubit resonator, the buffer resonator and the dissipation device are possibly built as superconducting circuits;
- the electronic apparatus further may comprise a generator for the first electromagnetic wave at frequency $\omega_b$ and a generator for the second electromagnetic wave at frequency $2\omega_a$-$\omega_b$, and a generator for the third electromagnetic wave at frequency $(2n+1)\omega_a + \omega_b$-$\omega_c$; These generators may be the same device, generating several waves;
- the generators for the first electromagnetic wave at frequency $\omega_b$ and for the second electromagnetic wave at frequency $2\omega_a$-$\omega_b$ and for the third electromagnetic wave at frequency $(2n+1)\omega_a + \omega_b$-$\omega_c$ may be microwave generators - all or only some of them -
- the cat qubit resonator can be a squeezed cat qubit resonator and wherein the coupling means are further configured for coupling a fourth electromagnetic wave at frequency $2\omega_a$+$\omega_b$ to the non-linear coupling element; and
- the non-linear coupling element can in this case be further configured for performing a further wave mixing involving two photons at frequency $\omega_a$, one photon at frequency $\omega_b$ and a photon of the fourth electromagnetic wave at frequency $2\omega_a$+$\omega_b$ to exchange said two photons at frequency $\omega_a$ in the cat qubit resonator with said photon at frequency $\omega_b$, the coupling means being further configured for coupling a fifth electromagnetic wave at a frequency $(2n'+1)\omega_a + \omega_b - \omega_c$ (or possibly several such waves), n' being a strictly negative integer, to the non-linear coupling element, the non-linear coupling element being further configured for performing another further wave mixing involving an odd number of photons at frequency $\omega_a$ in the cat resonator, one or several photons at frequency $\omega_b$ in the buffer resonator, one or several photons at frequency $\omega_c$ of the lossy mode and one or several photons at frequency $(2n'+1)\omega_a + \omega_b - \omega_c$ of the fifth electromagnetic wave, wherein an odd number of photons is added to the cat resonator while the buffer resonator is reset to vacuum;
- the cat qubit resonator is a squeezed cat qubit resonator and wherein the method comprises coupling a fourth electromagnetic wave at frequency $2\omega_a$+$\omega_b$ to the non-linear coupling element; and
- the generators for the fourth electromagnetic wave at frequency $2\omega_a$+$\omega_b$ and for the fifth electromagnetic wave at frequency $(2n'+1)\omega_a + \omega_b$-$\omega_c$ may be microwave generators - all or only some of them - the non-linear coupling element can include a capacitive coupling element coupling the cat qubit resonator to the buffer resonator;
- the coupling means may comprise an inductive coupling means configured for coupling the second electromagnetic wave at frequency $2\omega_a$-$\omega_b$ to the nonlinear coupling element;
- the non-linear coupling element may comprise an asymmetrically threaded Superconductive Quantum Interference Device (ATS).

As for the method and process features,

- the (2n+4)-wave mixing may be a second four-wave mixing (n=0);
- a further wave mixing involving two photons at frequency $\omega_a$, one photon at frequency $\omega_b$ and a photon of the fourth electromagnetic wave at frequency $2\omega_a$+$\omega_b$ can be performed in the non-linear coupling element to jointly take said two photons at frequency $\omega_a$ in the cat qubit resonator and said photon at frequency $\omega_b$ and exchange them with one photon of this fourth electromagnetic wave, a fifth electromagnetic wave at a frequency $(2n'+1)\omega_a + \omega_b - \omega_c$, n' being a strictly negative integer, being also coupled to the non-linear coupling element, and another further wave mixing involving $-(2n'+1)$ photons at frequency $\omega_a$ in the cat resonator, one photon at frequency $\omega_b$ in the buffer resonator, one photon at frequency $\omega_c$ of the lossy mode and one photon at frequency $(2n'+1)\omega_a + \omega_b - \omega_c$ of the fifth electromagnetic wave being performed in the non linear coupling element (30);
- In particular, it is possible that n'=-1 and/or that n=0.

Several of the described processes can be present simultaneously. In particular, (2n+4)-wave mixing can occur for several values of n simultaneously.
In the present disclosure, microwaves are considered as the waves between 300 MHz and 300 GHz, or, subsidiary, between 1 to 30 GHz. The invention can also use radiofrequencies or hyperfrequencies outside these ranges.

List of figures

Further features and advantages of the invention will become apparent by reference to the following detailed description of illustrative embodiments thereof and from the accompanying drawings, wherein:

Figure 1 is a general schematic of the invention.
Figures 2 and 3 are lumped-element models of a photon-dissipative confined cat-qubit setup with a correlated dissipation device according to an embodiment of the invention, the phase-flip reduction method being performed.

Figure 4 is the model of the same cat-qubit setup but without the phase-flip reduction method being performed.

Figure 5 shows the model of the same cat-qubit setup, but the cat being squeezed, and the phase-flip reduction method being performed.

Figure 6 shows the effect of the invention in the context of a single-qubit Z gate.

Figure 7 shows the effect of the invention in the context of a two-qubit CNOT gate.

Detailed description of the invention

Physical description

In the described embodiment, the invention builds up on the physical implementation of the photon-dissipation confined cat-qubit based on two resonators and a nonlinear coupling element, and introduces further features for the dissipation.

Thus the standard cat-qubit is stabilized in a high-quality harmonic oscillator mode noted A coupled to an oscillator mode noted B through a two-photon exchanger TPE. Moreover, a correlated dissipation device CDD performs joint (or correlated) dissipations of photons of modes A and B.

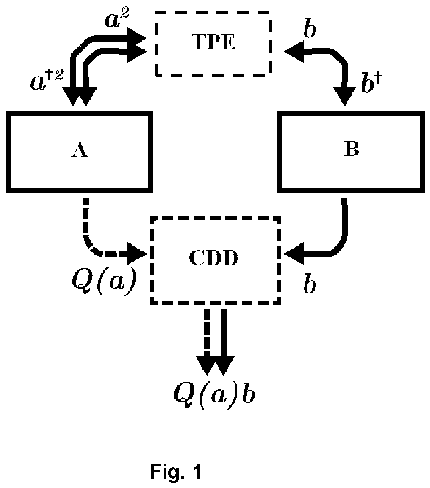

[Fig. 1] Such a setup is represented in Figure 1. The harmonic oscillator mode A is associated to a photon annihilation operator noted $a$ and a photon creation operator noted $a^\dagger$, and the oscillator mode B is associated to a photon annihilation operator $b$ and a photon creation operator noted $b^\dagger$.

In this Figure, the A mode is coupled to the B mode in two ways. First, the two-photon exchanger TPE converts pairs of photons from the A mode to single photons of the B mode, and vice-versa. Such an exchanger performs so-called "four-wave mixing", where the "four" stands for the three photons involved in the exchange and one photon from an external pump with tunable frequency.

Second, the correlated dissipation device CDD enables the correlated dissipation of A and B photons, with a required form for joint dissiptation Q($a$)b as shown on figure 1 or more generally Q($a$, $a^+$)b.

Thus in the invention the dissipator used is

$$Dissipator\left[Q(a, a^+)\, b\right](\rho)$$

$\rho$ being the density matrix of the cat-qubit, wherein the total power of $a$ and $a^+$ operators must be odd.

This dissipator always jointly modifies by an odd number the photons of A when annihilating a photon in B.

With $\alpha$ being the complex amplitude of a coherent state of the cat-qubit harmonic oscillator (eigenstate of the operator $a$), the resulting equations are for the coupling Hamiltonian modelling the TPE:

$$H_{coupling} = (a^2 - \alpha^2)b^+ + (a^2 - \alpha^2)^+ b$$

And for the evolution of $\rho$, the density matrix of the cat-qubit,

$$d/dt\,\rho = -i\left[H_{coupling}, \rho\right] + Dissipator[Q(a, a^+)\, b](\rho)$$

As a result of the two couplings, two photons of A are converted into a single photon of B, which then is dissipated away, but with an effect on A, the precise effect being defined by the choice made for Q. The joint dissipation thus modifies how the system, when it is perturbed, converges back towards the subspace of its steady states.

The operator $Q(a, a^+)$ implements an autonomous feedback: whenever the buffer mode B detects a deviation via $H_{coupling}$, the subsequent relaxation of B triggers an action on the mode A with Q(), without requiring any external intervention like a measurement and feedback action.

The embodiment of figure 1 features Q($a$)= a, meaning that one photon is annihilated in mode A jointly with one photon in mode B, but in alternative embodiments, any polynomial in odd powers of $a$ and $a^+$ can be used for Q.

The physical mechanism used is a wave mixing, where one photon of each type is involved, but the setup also works if other processes involving more photons are involved, as long as the number of photons exchanged with the cat resonator is odd. If Q($a$) = a and assuming nominal operation on the other waves, this is a four-wave mixing, and more generally, when Q corresponds to the annihilation of (2n+1) photons in mode A, it is a (2n+4)-wave mixing.

Regarding implementation, the proposed dissipation is of low enough complexity to meet the standard dissipation engineering capabilities of the devices on which cat-qubits are engineered.

A second embodiment uses squeezed cats. The stabilization of squeezed cat-qubits involves, in $H_{coupling}$,

replacing $a$ by $S(a)$, a linear combination of $a$ and $a^+$, that has similar coefficient for $a$ and $a^+$, if a high squeezing effect is desired.

The dissipator Dissipator[Q(a)b] is further replaced by Dissipator[S(a)b], or more generally Dissipator[Q(S(a))b] with Q an odd-power polynomial.

Again, as in the non-squeezed setup, the erroneous phase flips, typically associated to actuations inducing leaving the subspace of cat steady-states, are inverted by subtracting or adding exactly one photon while jumping back to the cat-qubit space. However, there is an important additional benefit in this embodiment based on squeezed cats. Indeed, unlike with standard cats, the squeezed cats are made to leave the cat-qubit space of steady states under the action of spontaneous single photon loss, which is the dominant error source in absence of any operation. Hence, the scheme also automatically inverts the phase flip associated to this spontaneous photon loss.

Practical implementation

As already mentioned, the invention builds up on the physical implementation of the photon-dissipation confined cat-qubit based on two resonators and a nonlinear coupling element, called an ATS. With superconducting circuits, such a device can be engineered in different ways.

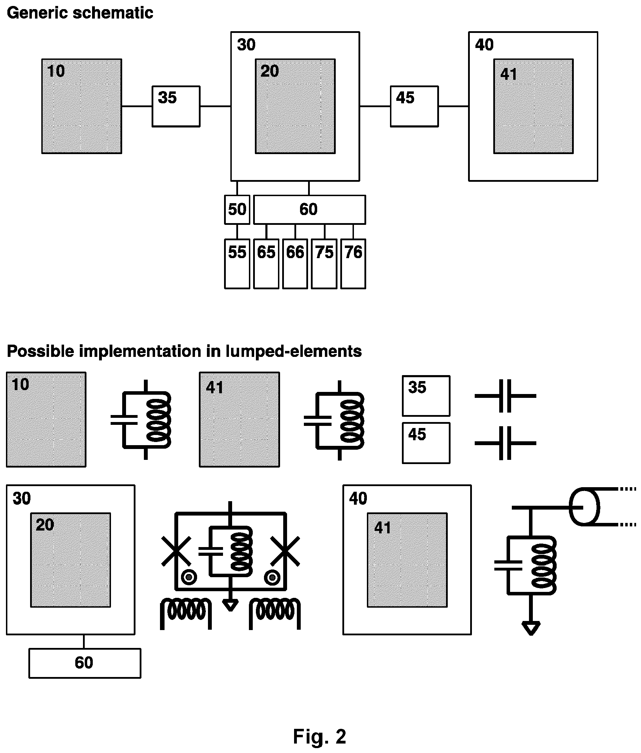

[Fig. 2] In figures 2 to 5, a cat-qubit resonator 10 is modelled by a harmonic LC-oscillator, i.e. an inductor and a capacitor mounted in parallel one to each other. It is a cat qubit electromagnetic resonator having a resonance frequency that is a first resonance frequency $\omega_a$. It is also the oscillator of mode A as shown on figure 1 and discussed above in relation to said figure 1.

In figure 2, the following elements are represented :

- 10 : cat qubit (a) resonator
- 20 : buffer mode (b) resonator
- 41 : dissipative mode (c) resonator
- 30 : non-linear coupling element, capable of mixing 4, 6, 8 waves or more (mixing an even number of waves)
- 40 : dissipation device, having at least one lossy mode
- 35, 45 : capacitive or inductive coupling elements
- 50 : micro-wave drive
- 55 : $\omega_b$ frequency drive
- 60 : radio-frequency pump (it has a frequency and an amplitude that are different from those of the micro-wave drive 50)
- 65 : $2\omega_a - \omega_b$ frequency pump
- 66 : $2\omega_a + \omega_b$ frequency pump (for squeezed cats)
- 75 : $(2n+1)\,\omega_a + \omega_b - \omega_c$ frequency pump
- 76 : $(2n'+1)\,\omega_a + \omega_b - \omega_c$ frequency pump (for squeezed cats)

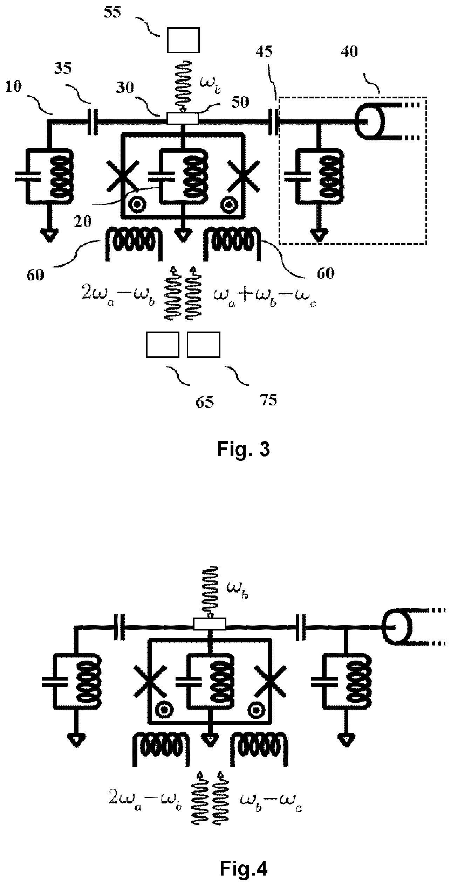

[Fig.3] As also shown on figure 3, the buffer resonator 20 is shown modelled as a harmonic LC-oscillator, though it may behave as a non harmonic oscillator. It is a buffer electromagnetic resonator having a resonance frequency that is a second resonance frequency $\omega_b$, different from the first resonance frequency. It is also the oscillator of mode B as shown on figure 1 and discussed above in relation to said figure 1.

To physically engineer the TPE Hamiltonian, coupling elements between the cat qubit mode (A) and the buffer mode (B) are required. This is done through the ATS 30 that is made of two Josephson junctions and has two current loops, and that is coupled to the cat-qubit resonator 10 through a capacitive coupling 35. The ATS 30 hosts the B mode. The ATS 30 embodies the TPE discussed above in relation to figure 1.

Further, a dissipative oscillator 40 is coupled to the ATS 30 through a capactive coupling 45. This dissipative oscillator 40 is mode C, and is made, in the example shown, of a harmonic LC-oscillator coupled to a transmission line, though like mode B it may as well be a non harmonic oscillator, and its dissipation may be embodied by any means. It has a lossy mode having a resonance frequency $\omega_c$ different from $\omega_a$ and $\omega_b$. It is associated to a photon annihilation operator c and a photon creation operator noted $c^\dagger$.

The coupling Hamiltonan modelling the CDD is:

$$H_{coupling2} \;=\; Q(a, a^+)\, b\, c^+ \;+\; (Q(a, a^+)\, b)^+ c \text{ associated to } Dissipator[c].$$

The ATS 30 and the dissipative oscillator 40 embody the CDD discussed in relation to figure 1.

The third oscillator C has important loss, because it is coupled for example to a wave guide.

The device also comprises coupling means for coupling 50 a first electromagnetic wave at frequency $\omega_b$ to the

ATS 30 and the resonators 10 and 20 through inductive or capacitive means. This can include a wave guide and a capacity or an (cross)-inductance, embodied by a printed circuit engineered to have wave guide effects and receiving the waves by a coaxial cable. The device also comprises, or is included in a system that comprises, a generator 55 for the first electromagnetic wave at frequency $\omega_b$.

The device also comprises inductive coupling means 60 for coupling a second electromagnetic wave at frequency $2\omega_a$-$\omega_b$ to the non-linear coupling element ATS 30; A magnetic field is needed in each of the two loops of the ATS, and for that, the inductive coupling means 60 create a magnetic field in the first loop by a first section of the inductive coupling means 60 while a second section of the inductive coupling means 60 create a second magnetic field in the second loop of the ATS, the two fields creating different flux in these loops. The inductive coupling means 60 are also used for coupling to the non-linear coupling element ATS 30 a third electromagnetic wave at a frequency $(2n+1)\omega_a +$ $\omega_b$-$\omega_c$. The device also comprises, or is included in a system that comprises a generator 65 for the second electromagnetic wave, and a generator 75 for the third electromagnetic wave.

The TPE embodied by the ATS 30 performs four-wave mixing between energy received from the resonator 10 (two photons at frequency $\omega_a$), energy received from the resonator 20 (one photon at frequency $\omega_b$), and the wave received from the generator 65 (one photo at frequency $2\omega_a$-$\omega_b$).

The CDD embodied by the ATS 30 and the dissipative oscillator 40 performs wave mixing, for example four wave mixing, between energy received from the resonator 10 ($2n+1$ photons at frequency $\omega_a$), energy received from the resonator 20 (one photon at frequency $\omega b$), one photon at frequency $\omega_c$ of the lossy mode and one photon at frequency $(2n+1)\omega_a$ $\omega_b$-$\omega_c$ of the electromagnetic wave generated by the generator 65. Figures 3 to 5 display three working points of the same circuit.

In figure 3, the circuit engineers Dissipator[a b] ($\rho$), as well as the two-photon exchange between the A and B modes, $H_{coupling}$. This is a parity-switching setup, since the parity of the number of photons in A is not conserved.

Thus, the second electromagnetic wave is at frequency $2\omega_a$-$\omega_b$ and the third electromagnetic wave is at a frequency $(2n+1)\omega_a + \omega_b$-$\omega_c$.

[Fig. 4] In figure 4, the circuit engineers Dissipator[b] ($\rho$), together with the same two-photon exchange, ans this is a parity-preserving setup.

Indeed, in standard cat-qubits, implementing the invention only during certain gate operations, and otherwise keeping the standard dissipation can be contemplated.

This dissipator is the one engineered for regular cat qubits, so this setup shows how to turn off the parity-switching device while keeping the same circuit layout. This setup change can be performed in practice by switching on and off the various wave sources.

Thus, the second electromagnetic wave is still at frequency $2\omega_a$-$\omega_b$ and the third electromagnetic wave is at a frequency $\omega_b$-$\omega_c$.

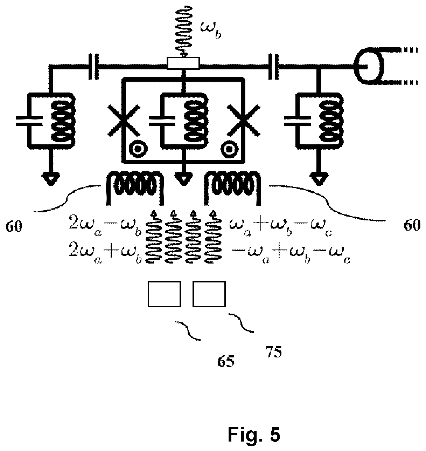

[Fig. 5] In figure 5, the circuit engineers Dissipator[S(a)b] ($\rho$), which is the parity-switching setup for squeezed cat states.

Thus, the second electromagnetic wave is at frequency $2\omega_a$-$\omega_b$ and the third electromagnetic wave is at a frequency $(2n+1)\omega_a + \omega_b$-$\omega_c$. But there is also a fourth electromagnetic wave at frequency $2\omega_a$+$\omega_b$ coupled to the non-linear coupling element ATS 30 by the inductice coupling means 60 and a fifth electromagnetic wave at a frequency $(2n'+1)\omega_a + \omega_b$-$\omega_c$, n' being a strictly negative integer, coupled to the non-linear coupling element ATS 30 by the inductive coupling means 60. These waves are generated by the generators 65 and 75, respectively, or by other generators or generator assemblies.

Similarly, a parity-preserving setup could be engineered for squeezed cats, thus as an option when not performing gates; but it is not shown.

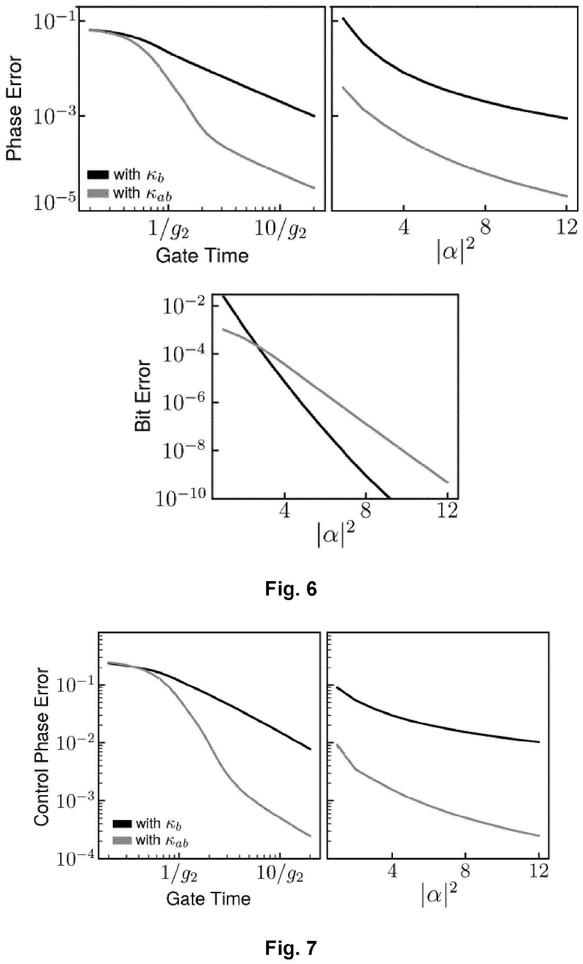

[Fig.6] The figure 6 shows gate errors of a Z gate with the autonomous feedback design of the invention at $\kappa_{ab}/|\alpha|^2 = 8g_2$ (grey) and with the regular design at $\kappa_b = 8g_2$ (black).

On the left: fixed cat size, $|\alpha|^2 = 8$.

On the right: fixed gate time, $T = 10/g_2$.

Figure 6 shows the errors induced by a Z gate for the regular gate and for the correlated dissipator of the invention for both phase-flip and bit-flip errors. For phase-flip errors, an improvement by a constant factor of about $\mu \approx$ 0.02 is found, independent of both gate time and cat size.

[Fig.7] The figure 7 shows gate errors of a CNOT gate with the autonomous feedback design of the invention at $\kappa_{ab}/|\alpha|^2 = 8g_2$ and with the regular design at $\kappa_b = 8g_2$ (black).

On the left: fixed cat size, $|\alpha|^2 = 8$.

On the right: fixed gate time, $T = 10/g_2$.

Dashed gray lines show non-adiabatic phase errors.

Figure 7 investigates such a setup for two-qubit CNOT gates. The correlated dissipator of the invention is activated on the control qubit. Here, the performance is similar to that of the single-qubit Z gate, with a phase fidelity improvement of $1/\mu \approx 50$.

Modifying the microwave pumps that thread the ATS loops can be done in real-time setup.

In other embodiments, this C mode is engineered with a transmon qubit or another non-linear resonator.

Further additional features can be present in the embodiments of the invention.

In particular, for logic gate implementations, additional feedforward Hamiltonians can be used as an optional feature, for even better preservation of quantum information.

The invention has been described through illustrative embodiments, in particular, using n=0 and for squeezed cats, n=0 and n'=-1, and Q(a) = a. It is possible to use other values of n, provided that n is non negative integer; n can be any positive integer, including 0. The value of n is determined by the manner the circuit is built and in particular by the order of non-linearity of the ATS or any non-linear coupling element replacing the ATS. It is also possible to use other values of n', provided that n' is a negative integer, different from 0. And Q can be a polynomial of odd powers of $a$ and $a^+$.

The oscillator 40 can be anharmonic, up to a qubit made of an anharmonic oscillator. It can also be absent, with the transmission line being directly coupled to the resonators 10 and 20 in the particular way inducing their joint dissipation as required by the invention.

Further, the B mode can be harmonic or anharmonic.

**Bibliography**

Mirrahimi, 2014: Mirrahimi et al., New J. Physics, 16, 045014, 2014

Lescanne, 2020: Lescanne et al., Nature Physics, 16, 509, 2020

Chamberland, 2020: Chamberland et al. arXiv:2012.04108, 2020

Guillaud, 2019: Guillaud et al., Physical Review X 9 (4), 041053, 2019

Puri, 2017: Puri et al., npj Quantum Information, 3, 18, 2017

Grimm, 2020: Grimm et al., Nature, 584, 205, 2020

Gautier, 2022: Gautier et al., PRX Quantum 3, 020339, 2022

Xu, 2022-1: Xu et al., Phys. Rev. Res. 4, 013082, 2022

Carde, 2021: Carde et al., Master of Sciences thesis, Inria Quantic & ENS Paris, 2021

Schlegel, 2022: Schlegel et al., arXiv:2201.02570, 2022

Xu, 2022-2: Xu et al., arXiv:2210.13406, 10/2022

Albert, 2019: Albert et al., Quantum Science and Technology 4, 035007, 2019

Ofek, 2016: Ofek et al., Nature 536, 441-445, 2016

Mabuchi, 2008: Mabuchi, Phys. Rev. A 78, 032323, 2008

James and Gough, 2010: James and Gough in IEEE Transactions on Automatic Control, vol. 55, no. 8, pp. 1806-1821, 2010

**Claims**

1. Electronic apparatus for storing quantum information, comprising:

   - a cat qubit electromagnetic resonator (10) having a first resonance frequency ωa;
   - a buffer electromagnetic resonator (20) having a second resonance frequency $\omega_b$ different from the first resonance frequency;
   - a non-linear coupling element (30) coupling the cat qubit resonator (10) to the buffer resonator (20);
   - coupling means configured (50) for coupling a first electromagnetic wave at frequency $\omega_b$ to the non-linear coupling element (30) and coupling means (60) configured for coupling a second electromagnetic wave at frequency $2\omega_a$-$\omega_b$ to the non-linear coupling element (30); and
   - a dissipation device (40) coupled to the cat qubit resonator (10) and to the buffer resonator (20) through the non-linear coupling element (30);

   wherein the non-linear coupling element (30) is configured for performing a four-wave mixing involving two photons at frequency $\omega_a$, one photon at frequency $\omega_b$ and a photon of the second electromagnetic wave at frequency $2\omega_a$-$\omega_b$ to exchange said two photons at frequency $\omega_a$ in the cat qubit resonator (10) with said photon at frequency $\omega_b$; **characterized in that** the coupling means (60) are further configured for coupling a third electromagnetic wave at a frequency $(2n+1)\omega_a + \omega_b$-$\omega_c$, $\omega_c$ being a resonance frequency of a lossy mode of the dissipation device (40) different from $\omega_a$ and $\omega_b$ and n being a non-negative integer, to the non-linear coupling element (30), and **in that** the non-linear coupling element (30) is further configured for performing a (2n+4)-wave mixing involving (2n+1) photons at frequency $\omega_a$ in the cat qubit resonator (10), one photon at frequency $\omega_b$, one photon at frequency $\omega_c$ of the lossy mode and one photon at frequency $(2n+1)\omega_a + \omega_b - \omega_c$ of the third electromagnetic wave, said (2n+4)-wave mixing causing a positive odd number of photons of the cat qubit resonator (10) to dissipate correlately through the dissipation device with one photon of the buffer resonator (20).

2. Electronic apparatus according to claim 1, wherein the further dissipation device (40) comprises a third electromagnetic resonator, resonant at frequency $\omega_c$, and coupled to a transmission line.

3. Electronic apparatus according to claim 1, wherein the buffer resonator (20) and/or the further dissipation device (40) comprises a non-linear resonator.

4. Electronic apparatus according to any of claims 1 to 3, wherein the cat qubit resonator (10), the buffer resonator (20) and the dissipation device (30) are built as superconducting circuits.

5. Electronic apparatus according to any of claims 1 to 4, further comprising a generator (55) for the first electromagnetic wave at frequency $\omega_b$ and a generator (65) for the second electromagnetic wave at frequency $2\omega_a - \omega_b$, and a generator (75) for the third electromagnetic wave at frequency $(2n+1)\omega_a + \omega_b - \omega_c$.

6. Electronic apparatus according to claim 5, wherein the generators (55, 65, 75) for the first electromagnetic wave at frequency $\omega_b$ and for the second electromagnetic wave at frequency $2\omega_a - \omega_b$ and for the third electromagnetic wave at frequency $(2n+1)\omega_a + \omega_b - \omega_c$ are microwave generators.

7. Electronic apparatus according to any of claims 1 to 6, wherein the cat qubit resonator (10) is a squeezed cat qubit resonator and wherein the coupling means (60) are further configured for coupling a fourth electromagnetic wave at frequency $2\omega_a + \omega_b$ to the non-linear coupling element (30); and
wherein the non-linear coupling element (30) is further configured for performing a further wave mixing involving two photons at frequency $\omega_a$, one photon at frequency $\omega_b$ and a photon of the fourth electromagnetic wave at frequency $2\omega_a + \omega_b$ to exchange said two photons at frequency $\omega_a$ in the cat qubit resonator (10) with said photon at frequency $\omega_b$, the coupling means (60) being further configured for coupling a fifth electromagnetic wave at a frequency $(2n'+1)\omega_a + \omega_b - \omega_c$, n' being a strictly negative integer, to the non-linear coupling element (30), the non-linear coupling element being further configured for performing another further wave mixing involving $-(2n'+1)$ photons at frequency $\omega_a$ in the cat resonator, one photon at frequency $\omega_b$ in the buffer resonator, one photon at frequency $\omega_c$ of the lossy mode and one photon at frequency $(2n'+1)\omega_a + \omega_b - \omega_c$ of the fifth electromagnetic wave.

8. Electronic apparatus according to any of claims 1 to 7, wherein the non-linear coupling element (30) includes a capacitive coupling element (35) coupling the cat qubit resonator (10) to the buffer resonator (20).

9. Electronic apparatus according to any of claims 1 to 8, wherein the coupling means (60) comprise inductive coupling means configured for coupling the second electromagnetic wave at frequency $2\omega_a - \omega_b$ to the nonlinear coupling element (30).

10. Electronic apparatus according to any of claims 1 to 9, wherein the non-linear coupling element (30) comprises an asymmetrically threaded Superconductive Quantum Interference Device.

11. Method for storing quantum information, comprising:

- coupling a cat qubit electromagnetic resonator having a first resonance frequency $\omega_a$ and a buffer electromagnetic resonator having a second resonance frequency $\omega_b$ different from the first resonance frequency with a non-linear coupling element;
- coupling a first electromagnetic wave at frequency $\omega_b$ and a second electromagnetic wave at frequency $2\omega_a - \omega_b$ to the non-linear coupling element; and
- coupling a dissipation device to the cat qubit resonator and to the buffer resonator through the non-linear coupling element;

wherein the method for storing information further comprises performing a four-wave mixing with the non-linear coupling element involving two photons at frequency $\omega_a$, one photon at frequency $\omega_b$ and a photon of the second electromagnetic wave at frequency $2\omega_a - \omega_b$ to exchange said two photons at frequency $\omega_a$ in the cat qubit resonator with said photon at frequency $\omega_b$; **characterized in that** the method for storing information further comprises coupling a third electromagnetic wave at a frequency $(2n+1)\omega_a + \omega_b - \omega_c$, $\omega_c$ being a resonance frequency of a lossy mode of the dissipation device different from $\omega_a$ and $\omega_b$ and n being a non-negative integer, to the non-linear coupling element, and **in that** the method for storing information further comprises performing a (2n+4)-wave mixing with the non-linear coupling element involving $(2n+1)$ photons at frequency $\omega_a$ in the cat resonator, one photon at frequency $\omega_b$, one photon at frequency $\omega_c$ of the lossy mode and one photon at frequency $(2n+1)\omega_a + \omega_b - \omega_c$ of the third electromagnetic wave, said (2n+4)-wave mixing causing a positive odd number of photons of the cat qubit resonator to dissipate correlately through the dissipation device with one photon of the buffer resonator.

12. Method for storing quantum information according to claim 11, wherein the (2n+4)-wave mixing is a second four-wave mixing.

13. Method for storing quantum information according to claim 11 or claim 12, wherein the cat qubit resonator (10) is a squeezed cat qubit resonator and wherein the method comprises coupling a fourth electromagnetic wave at frequency $2\omega_a + \omega_b$ to the non-linear coupling element (30); and
wherein a further wave mixing involving two photons at frequency $\omega_a$, one photon at frequency $\omega_b$ and a photon of the fourth electromagnetic wave at frequency $2\omega_a + \omega_b$ is performed in the non-linear coupling element (30) to exchange said two photons at frequency $\omega_a$ in the cat qubit resonator (10) with said photon at frequency $\omega_b$, a fifth electromagnetic wave at a frequency $(2n'+1)\omega_a + \omega_b - \omega_c$, n' being a strictly negative integer, being also coupled to the non-linear coupling element (30), and another further wave mixing involving $-(2n'+1)$ photons at frequency $\omega_a$ in the cat resonator, one photon at frequency $\omega_b$ in the buffer resonator, one photon at frequency $\omega_c$ of the lossy mode and one photon at frequency $(2n'+1)\omega_a + \omega_b - \omega_c$ of the fifth electromagnetic wave being performed in the non linear coupling element (30).

14. Method for storing quantum information according to claim 13, wherein n'=-1.

**Fig. 1**

**Generic schematic**

**Possible implementation in lumped-elements**

Fig. 2

**Fig. 3**

**Fig.4**

**Fig. 5**

**Fig. 6**

**Fig. 7**

Europäisches
Patentamt

European
Patent Office

Office européen
des brevets

**EUROPEAN SEARCH REPORT**

**Application Number**

**EP 22 30 6809**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LESCANNE RAPHAËL ET AL: "Exponential suppression of bit-flips in a qubit encoded in an oscillator", NATURE PHYSICS, NATURE PUBLISHING GROUP, LONDON, GB, vol. 16, no. 5, 16 March 2020 (2020-03-16), pages 509-513, XP037131235, ISSN: 1745-2473, DOI: 10.1038/S41567-020-0824-X [retrieved on 2020-03-16] * pages 509-511 * | 1-14 | INV. G06N10/70 G06N10/40 |
| A | QIAN XU ET AL: "Autonomous quantum error correction and fault-tolerant quantum computation with squeezed cat qubits", ARXIV.ORG, CORNELL UNIVERSITY LIBRARY, 201 OLIN LIBRARY CORNELL UNIVERSITY ITHACA, NY 14853, 24 October 2022 (2022-10-24), XP091352685, * Sections II, IV and V.A * | 1-14 | |
| A | TIMO HILLMANN ET AL: "Quantum error correction with dissipatively stabilized squeezed cat qubits", ARXIV.ORG, CORNELL UNIVERSITY LIBRARY, 201 OLIN LIBRARY CORNELL UNIVERSITY ITHACA, NY 14853, 24 October 2022 (2022-10-24), XP091353008, * Section IV * | 1-14 | TECHNICAL FIELDS SEARCHED (IPC) G06N |
| A | J\'ER\'EMIE GUILLAUD ET AL: "Quantum computation with cat qubits", ARXIV.ORG, CORNELL UNIVERSITY LIBRARY, 201 OLIN LIBRARY CORNELL UNIVERSITY ITHACA, NY 14853, 25 August 2022 (2022-08-25), XP091301867, * Sections 1-3 * | 1-14 | |

-/--

The present search report has been drawn up for all claims

| Place of search | Date of completion of the search | Examiner |
|---|---|---|
| The Hague | 4 May 2023 | Targon, Valerio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 22 30 6809

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RONAN GAUTIER ET AL: "Combined Dissipative and Hamiltonian Confinement of Cat Qubits", ARXIV.ORG, CORNELL UNIVERSITY LIBRARY, 201 OLIN LIBRARY CORNELL UNIVERSITY ITHACA, NY 14853, 1 April 2022 (2022-04-01), XP091195780, * Sections III and VI * ----- | 1-14 | |
| A | US 2021/234086 A1 (LESCANNE RAPHAËL [FR] ET AL) 29 July 2021 (2021-07-29) * paragraphs [0039] - [0058] * ----- | 1-14 | |

TECHNICAL FIELDS
SEARCHED (IPC)

The present search report has been drawn up for all claims

| Place of search | Date of completion of the search | Examiner |
|---|---|---|
| The Hague | 4 May 2023 | Targon, Valerio |

EPO FORM 1503 03.82 (P04C01)

## ANNEX TO THE EUROPEAN SEARCH REPORT
## ON EUROPEAN PATENT APPLICATION NO.

EP 22 30 6809

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2023

| Patent document cited in search report | | Publication date | Patent family member(s) | Publication date |
|---|---|---|---|---|
| US 2021234086 | A1 | 29-07-2021 | JP    2021118342 A | 10-08-2021 |
| | | | KR  20210095784 A | 03-08-2021 |
| | | | US    2021234086 A1 | 29-07-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11302856 B2

**Non-patent literature cited in the description**

- **MIRRAHIMI et al.** *New J. Physics,* 2014, vol. 16, 045014
- **LESCANNE et al.** *Nature Physics,* 2020, vol. 16, 509
- **HAMBERLAND et al.** *arXiv:2012.04108,* 2020
- **GUILLAUD et al.** *Physical Review X,* 2019, vol. 9 (4), 041053
- **PURI et al.** *Quantum Information,* 2017, vol. 3, 18
- **GRIMM et al.** *Nature,* 2020, vol. 584, 205
- **GAUTIER et al.** *PRX Quantum,* 2022, vol. 3, 020339
- **XU et al.** *Phys. Rev. Res.,* 2022, vol. 4, 013082
- **CARDE et al.** Master of Sciences thesis. Inria Quantic & ENS Paris, 2021
- **SCHLEGEL et al.** *arXiv:2201.02570,* 2022
- **XU et al.** *arXiv:2210.13406,* October 2022
- **ALBERT et al.** *Quantum Science and Technology,* 2019, vol. 4, 035007
- **OFEK et al.** *Nature,* 2016, vol. 536, 441-445
- **MABUCHI.** *Phys. Rev. A,* 2008, vol. 78, 032323
- **JAMES ; GOUGH.** *IEEE Transactions on Automatic Control,* 2010, vol. 55 (8), 1806-1821